Europäisches Patentamt

European Patent Office

Office européen des brevets

(11) Publication number: **0 082 308**

**A1**

(12) # EUROPEAN PATENT APPLICATION

(21) Application number: **82110645.7**

(22) Date of filing: **18.11.82**

(51) Int. Cl.³: **B 23 K 33/00**
**B 23 K 11/14**

(30) Priority: **18.12.81 IT 2566681**

(43) Date of publication of application:
**29.06.83 Bulletin 83/26**

(84) Designated Contracting States:
**AT BE CH DE FR GB LI NL SE**

(71) Applicant: **EMU S.p.A.**
**31, Via B. Buozzi**
**I-06055 Marsciano Perugia(IT)**

(72) Inventor: **Biscarini, Aldo**
**31, Via B. Buozzi**
**Marsciano Perugia(IT)**

(74) Representative: **Marietti, Giuseppe**
**CENTRO DI CONSULENZA IN PROPRIETA'**
**INDUSTRIALE viale Caldara, 43**
**I-20122 Milano(IT)**

(54) **A process for manufacturing metal furniture and furniture so obtained.**

(57) This invention concerns a new process for manufacturing metal furnitures or other metal furnishing components, by welding on a tubular frame (10) an element defining a bearing or supporting surface, shaped as a series of tubular bodies, (26) as a rod grating (22) or a plate (28). In order to simultaneously improve the static resistance of the frame, the production rapidity and simplicity, the finishing level of the product and its appearance, the welding of said bearing or supporting element (24, 26, 28) is performed in correspondence with at least a plane surface shown by at least some components (10, 12) of the tubular frame. The plane surface is preferably obtained through a fin (14) formed by drawing a tube having circular or oval section, the fin being suitably off centered to make the application wider and universal (Figure 5).

Fig.5

EP 0 082 308 A1

This invention concerns a process for manufacturing metal furnitures or other metal furnishing components, formed by a tubolar frame and by at least one element defining a bearing or supporting surface, said element being constituted by

a series of tubular bodies, by a rod grating and/ or by a continuous or punched ,   and being welded to the tube in correspondence with its terminal area or areas in contact with the tubular frame. The invention also concerns furnitures or other furnishing components obtained with the process according to the invention and constituting a new industrial products.

The manufacture of metal furniture is carried out   , starting from  a  frame  made  of  tubolar components, having any suitable section, to which an element defining at least a bearing or  supporting surface is welded. The latter element can have the most different shapes; for example it can consist of a series of tubular bodies, spaced and parallel to each other, with their end fixed by welding to the supporting  frame, said bodies being, on their turn, designed to support other components,   made of different material and fixed in a removable  way, for instance coverings in plastic material, which complete the piece of furniture or the furnishing component. In other cases, the bearing or supporting element is formed by a rod grating, previously formed by welding, for instance projection welding, cut to size and applied by welding its ends to the tubular frame. Finally, another possibility for the bearing or supporting element is constituted by a plate, eventually punched according to whatever desired design, which is on its turn, cut to size and fixed by welding, in its parts resting on the frame. The welded semifinished product so obtained is completed, if necessary, with suitable operations of shaping and application of other components, for example, supporting legs and arms in the case of a chair, supporting legs in the case of a table and so on, after which the assembly is sent for plastification, which of course must be performed in a way as to ensure a complete protection of all exposed surfaces. All the present techniques for welding the bearing or supporting element to the tubular frame show drawbacks, both for what concerns the necessary working stages and for what concerns the static resistance of the finished product, and finally for what refers to keeping the protection characteristics assigned to the product with the subsequent operation of plastification. In fact, for example in the case of a bearing or supporting element formed by a series of tubular bodies, extending perpendicularly to the frame to which they must be welded, the present technique considers the flattening of the ends of the tubular bodies and their welding in correspondence with the lower surface of the frame, said technique being necessary owing to the fact that this kind of bearing or supporting element is generally used for the formation of supporting surfaces and is therefore designed to support a part of plastic material fixed to the tubular bodies. These latter, in order to improve the component

0082308

outward appearance, must be fixed to the lower part of the
tubular frame, opposite to the part showing said
supporting surface.

This solution necessarily involves welding difficulties
due to the curved surfaces of the tubular frame, but above
all it is such that the welded points tend to open or to break
away when the furnishing element in particular a chair or the like
that the static forces acting on same are such as to
cause the separation of the welded components. This
condition results to be particularly serious, in that the subsequent operation of plastification, does not
allow the plastics to penetrate in the best way into
the gaps of the reciprocally welded areas and forms a
layer which can easily break during the use of the
product, leading therefore to a rapid degradation of
same due to the formation of oxidation points.

The same thing occurs when welding is performed between a tubular frame and a rod grating. In this case, welding
is carried out as usual by projection and the operation
necessarily requires, after welding, an operation of
cutting and finishing those parts of the grating protruding with respect to the tubular frame surface,
both for aesthetic and practical reasons. Under these
conditions, too, the operation of plastification is
not performed under optimal conditions and can easily
lead to a not perfect application of the plastic material
into the gaps near the welded areas and asily involves
breaking of the protective layer of plastic material.

Finally, when the bearing or supporting element is
formed by a plate, the present manufacturing technique, after the shearing of said plate, comprises a drawing stage to adapt the edges of said plate to the configuration of the tubular frame, a projection welding and then a final flanging stage of said plate. The plate is generally welded to get one extension to partially follow the surface of the tubular frame, or it is bent in advance at its edges, approximately according to an angle of 90°, and said bent is part is welded. In any case, besides said working difficulties, the same previously mentioned drawbacks relating to manufacture and duration in time of the best protecting conditions given by the plastic layer are still present. This invention proposes a new process for the industrial manufacture of furniture of said type, which allows to simultaneously achieve a series of advantages, impossible to be obtained up to now with the known techniques, said advantages comprising an improvement in the static conditions of the product, a reduction of the necessary manufacturing stages, with elimination or simplification of some of them, an improvement of the finishing for a better and more uniform distribution of the protective plastic layer and for keeping the characteristics of same unaltered even in the long use of the product, and finally an improvement of its outward aspect and the possibility of obtaining new products.

All these advantages are obtained by means of a process of the type defined hereinabove, which, according to the invention, is essentially characterized by the following stages: forming at least part of the frame with shaped tubes having at least a plane surface, placing area or areas of the bearing or supporting element in contact with the plane surface of the components of the tubular frame and welding by projection said terminal areas onto the plane surface.

The invention also concerns a metal piece of furniture or furnishing component, which is obtained by carryng out the above described process and shows new structural and aesthetic features as better examined later on.

The following description of preferred embodiments of the invention, given as mere examples, will point out the advantages of the process and of the products according to the invention, in relation to what previously known and hereinabove described.

In the drawing:

Figures 1 and 2 are partial perspective cross-sectional views of two possible embodiments of the components of the tubular frame, for carring-out the process according to the invention.

Figures 3 to 6 are partial perspective views of the methods of application and fixing different possible bearing or supporting elements to a tubular frame according to the invention, all the figures being partial perspective views.

Figures 7 and 8 are diagrammatic cross-section al wiews showing the application of a protecting plastic layer on the components of the preceding figures.

Figures 9 and 10 are perspective view illustrating the methods for bending the components of the frame according to the invention.

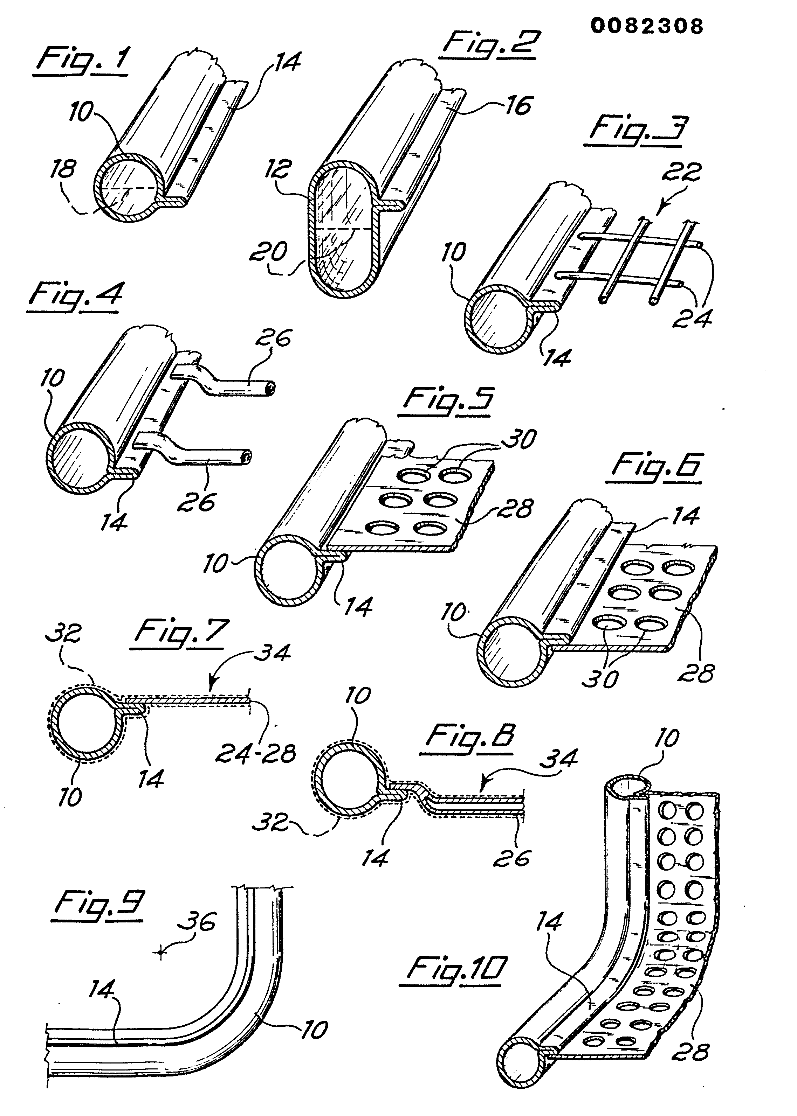

Referring to figures 1 and 2, two possible components of a tubular frame forming the support for furniture or furnishing components manufactured according to the invention are shown.

As already said, said components of tubular frame must have at least a plane surface. Preferably they are constituted by a drawn tubolar element 10 with circular section or by a drawn tubular element 12 with oval section directly obtained with a protruding side fin 14 or 16, which can be advantageously off centered with respect to the diameter 18 or to the transversal axis 20 of the section, to which said fin 14 or 16 is parallel. The tubular elements can be obtained without difficulty for instance by cold drawing and have only slightly higher manufacturing cost than tubes without fin 14 or 16, but they give, as it will be seen, advantages which widely compensate this slighthly higher cost. As figures 1 and 2 immediately show, said tubes present, with respect to equal tubes with merely circular or oval section, a first advantage due to the presence of the fin 14 or 16, which causes an increase of the moment of inertia of said tubes and therefore cooperates to improve the static resistance of the tubes and consequently of the finished product.

Figures 3, 4, 5 and 6 illustrate the welding operation of different bearing or supporting elements to tubes 10 of the type illustrated in figure 1. In figure 3, the fin 14 is placed in the upper position, namely towards the position at sight of the piece or component of furniture. The grating 22 is welded with the ends of its transversal rods 24 in correspondence to the upper surface of the fin 14, said welding being performed in a way known in itself by projection. It can be immediately seen that the reciprocal disposition of the fin 14 and grating 22 allows to eliminate the operations of trimming and grinding the ends of transversal rods 24, necessary with the known production techniques, that welding covers to a considerable extent the fin 14 and the part of plane surface of same, assuring therefore a better reliability, and finally that, as the product is manufactured considering that loads acting on the grating 22 will act from upside down in figure, a structure with better static resistance is obtained.

In figure 4, the tubular component 10 is positioned to get its fin 14 to be oriented in the lower part of same, that is in the part opposite to the part of the product at sight.

The previously flattened ends of several tubular bodies 26 are fixed to the upper surface of the fin 14 said tubular bodies 26 being on their turn designed to support a covering element, for instance made of plastic material, which is fastened to the tubular bodies 26 and fills the plane defined by said latter bodies and the plane tangent upside to the tube 10. In this case, too, easy projection welding is obtained on large surfaces in contact and with such reciprocal disposition of the tubular bodies 26 and fin 14 that the static stresses exercised on the product, still from upside down in figure, are such as not to tend to cause separation of the welded pieces, nor, as it will be better seen later on, breaking of the plastified surface layer.

In figures 5 and 6, the tubular element 10, positioned for instance with its fin 14 in the upper part, is coupled to a plate 28 with possible holes 30. The plate 28 can be welded by projection in the upper part or in the lower part of the fin 14, as illustrated in figures 5 and 6 respectively. The first configuration allows better resistance to static stress exercised from upside down, while the second configuration resists to stress exercised from down upwards and if part at sight of the furnishing component is the upper one, a better outward aspect of the product is obtained in case the holes 30 are on the terminal area of the plate 28. As compared to the traditional procedure, in this case there is the advantage of eliminating the drawing and flanging of plate 28, also obtaining a better finishing of the product as it will be seen in the description of the following figures 7 and 8. According to said figures 7 and 8, the tubular component 10 presents its fin 14 fixed to the rods 24 or to the plate 28, or to the tubular bodies 26 respectively. In both cases, the immersion of the previously heated product into powdered plastic material, according to the presently used plastification technique, allows to apply a plastic layer 32 which completely and safely covers the whole welded joint, as the powder easily penetrates into the gaps between the welded parts. Moreover, as indicated by arrows 34 in figures 7 and 8, the reciprocal disposition of the fins 14 and          bearing or supporting element welded to said fins is such that the stress exercised on the latter is discharged on the fin 14, and actions of reciprocal separation between the welded parts are not exercised. This advantage positively affects not only the static resistance of the product, but also and above all the finishing of same, in that the protective superficial layer 32 of plastic material is capable of perfectly resisting to the stress usually exercised on the product without cracking and therefore without allowing oxidation to begin. As it will become obvious to those skilled in the art the fact of envisaging the presence of the supporting surface for the projection welding between components of the supporting tubular frame and of the element defining the bearing or supporting surface, in furniture or similar furnishing components, allows to obtain an outward aspect of the product better than that obtained with the known industrial processes and opens the way to the study of new products. The only limitation is due to the fact that, in the case where the tubular component of the frame, for example the tube 10, has to be bent, before or after being welded to the supporting element of same, its fin 14 must necessarily be parallel, before and after the bending operation, to the rotation axis, as indicated in figure 9 at 36 of intersection of same with the plane of the figure. In this case, it is possible to bend the tubes without any problem, keeping said advantageous working conditions of the product unaltered. For example, figure 10 schematically illustrates a corner of a chair, in which the tubular frame has been bent as previously said, together with the plate 28. This product, like the other, ones can be completed with the application of other elements, in particular other elements of the frame which, not requiring a projection welding to parts of the supporting elements, can have a simple tubular configuration.

The above mentioned examples, of course, are not at all intended as covering all possibilities of application and embodiment of the invention, particularly in that concerns the configuration of the components of frame 10 and 12 as well as the structure and configuration of the bearing or supporting element .

C L A I M S

1) A process for the industrial manufacture of metal furniture or other metal furnishing components, formed by a tubular frame (10, 12) and by at least an element defining a bearing or supporting surface, said element being constituted by a series of tubular bodies, (26) by a rod grating (22) and/or by an eventually punched plate, (28) and being welded to the frame in correspondence with its terminal area or areas in contact with the tubular frame, characterized by the steps at:
forming at least part of the frame with shaped tubes (10, 12) having at least a plane surface; (14, 16) positioning terminal area or areas of said supporting element (22, 26, 28) in contact with said plane surface of the tubular frame parts; and welding by projection said terminal areas onto said plane surface.

2) A process according to claim 1, wherein the tube (10, 12) with plane surface is obtained by cold drawing.

3) A process according to claim 1 or 2, wherein at least part of the frame is formed by tubes having at least a side fin (14, 16) forming said plane surface.

4) A process according to claim 3, wherein said side fin (14, 16) extends in a off centered position with respect to the diameter (18) or to the axis (20) of the tube, to which said fin is parallel.

5) A process according to one of the preceding claims, wherein said fin (14, 16) extends on a plane substantially parallel to the axis (36) of possible bending of the tube.

6)A process according to one of the preceding claims, in which said supporting element is constituted by a series of tubular bodies,(20)on their turn designed to support a covering, wherein the ends of each tubular body (26) are flattened, before welding, and they rest on the plane surface so that the stress exercised on the tubular bodies during their use acts on the plane surface.

7) A metal furniture or piece of furniture, as formed by a tubular frame and by at least an element defining a bearing or supporting surface and constituted by a series of tubular bodies, (26) by a rod grating (22) and/or by a plate, (28) eventually punched, (at 30) said element being welded in correspondence to its terminal areas in contact with the tubular frame, wherein at least part of the frame is formed by a shaped tube (10, 12) with at least a plane surface (14, 16) and wherein the bearing or supporting element (22, 26, 28) is positioned with its edges or ends in contact with the plane surface and welded to the contact areas.

8) A furniture or component of furniture according to one of the preceding claims, wherein said shaped tube is a tube (10, 12) with circular or oval section having at least a protruding fin (14, 10) and wherein the bearing or supporting element (22, 26, 28) is fixed by welding to one of the plane surfaces of the fin.

9) A furniture or component of furniture according to claim 8, wherein said protruding fin (14, 16) is off centered with respect to the diameter (18) or the axis (20) of the tube (10, 12) to which it is parallel.

0082308

Fig.1
Fig.2
Fig.3
Fig.4
Fig.5
Fig.6
Fig.7
Fig.8
Fig.9
Fig.10

# EUROPEAN SEARCH REPORT

**0082308**

Application number

EP 82 11 0645

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| | --- | | B 23 K 33/00 |
| Y | DE-A-2 645 239 (LICENTIA) *Figure 10* | 1-7 | B 23 K 11/14 |
| | --- | | |
| Y | FR-A-1 139 189 (DE GRAAFF) *The whole document* | 1-9 | |
| | --- | | |
| A | FR-A-1 298 377 (PEUGEOT) | | |
| | --- | | |
| A | GB-A- 711 614 (VAN SCHOTHORST) | | |
| | ----- | | |

| TECHNICAL FIELDS SEARCHED (Int. Cl. ³) |
|---|
| B 23 K B 21 D A 47 B |

The present search report has been drawn up for all claims

| Place of search | Date of completion of the search | Examiner |
|---|---|---|
| THE HAGUE | 24-01-1983 | HOORNAERT W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03.82